# EUROPÄISCHE PATENTANMELDUNG

(11) **EP 0 923 856 A1**
(43) Veröffentlichungstag der Anmeldung: **23.06.1999**
(21) Anmeldenummer: 98124130.0
(22) Anmeldetag: 18.12.1998
(51) Int. Cl.: A01J 25/12, A01J 25/15

(54) **Vorrichtung zum Formen von Käserohlingen durch Pressen**

(30) Priorität: 19.12.1997 DE 29722522 U
(71) Anmelder: Stecher, Petra, 87772 Schöneberg (DE)
(72) Erfinder: Stecher, Petra, 87772 Schöneberg (DE)
(74) Vertreter: Klunker . Schmitt-Nilson . Hirsch

(57) **Zusammenfassung**

Eine Vorrichtung (1) zum Formen von Käserohlingen durch Pressen weist wenigstens einen Preßtisch (4) mit einer vorgegebenen Anzahl von Preßplätzen zum Aufnehmen von die Käserohlinge enthaltenden Käsepreßformen (18) mit flexiblen Preßdeckeln (19) auf, wobei jedem Preßplatz eine steuerbare Preßeinrichtung zugeordnet ist, durch welche die entsprechende Käsepreßform für eine vorgegebene bzw. wählbare Zeitspanne mit Druck beaufschlagbar ist. Die neue Vorrichtung ist als eine sich im wesentlichen in Vertikalrichtung erstreckende, geschlossene Mehretagenanordnung mit einer vorgegebenen Anzahl von separaten Etagen (2, 3) ausgebildet, wobei in jeder Etage ein Preßtisch (4) mit im wesentlichen horizontaler Ausrichtung angeordnet ist. Im Bereich jeder der in Vertikalrichtung aufeinanderfolgend angeordneten Etagen (2, 3) ist ein im wesentlichen horizontal verlaufender Tunnel (5, 6) gebildet, in welchem die Preßplätze (7, 8, 9, 10) mit zugeordneten Preßeinrichtungen (11, 12, 13, 14) in wenigstens einer Reihe aufeinanderfolgend auf dem Preßtisch (4, 5) angeordnet sind.

## Beschreibung

Die Neuerung betrifft eine Vorrichtung zum Formen von Käserohlingen durch Pressen, wobei die Vorrichtung wenigstens einen Preßtisch mit einer vorgegebenen Anzahl von Preßplätzen zum Aufnehmen von die Käserohlinge enthaltenden Käsepreßformen mit flexiblen Preßdecken aufweist und wobei jedem Preßplatz eine steuerbare Preßeinrichtung zugeordnet ist, durch welche die entsprechende Käsepreßform für eine vorgegebene bzw. wählbare Zeitspanne mit Druck beaufschlagbar ist.

Im Verlaufe bekannter Käseherstellungsvorgänge werden die Käserohblöcke oder Käserohlinge einer Reihe von aufeinanderfolgenden Behandlungsstufen unterzogen, insbesondere werden bei einem üblichen, bisher angewandten Herstellungsprozeß zur Herstellung von Käse der Bereiche halbfester Schnittkäse bis hin zu Hartkäse (Butterkäse bis Emmentaler) die entsprechenden Käserohblöcke oder Käserohlinge, welche bereits vorgepreßt sind, einer abschließenden Behandlungsstufe unterworfen, in welcher die Käserohblöcke oder Käserohlinge nach- und fertiggepreßt werden. Hierbei werden die vorbereitenden Käserohlinge, insbesondere bei Schnittkäse, in Fertigpreßformen überführt, wobei sodann diese Fertigpreßformen in sogenannte Nachpressen transportiert und dort für eine vorgegebene oder wählbare Zeitspanne einem Preßprozeß unter Druckbeaufschlagung unterworfen werden. Bei diesen bekannten Nachpressen ist die Anordnung der Preßplätze im Inneren flächenbezogen, derart, daß auf einer Flurebene eine oder mehrere Preßplätze, zum Beispiel zwei, drei, vier, fünf oder mehr, parallel nebeneinander angeordnet sind. Dies hat zur Folge, daß die von den vorgeschalteten Käseproduktionsanlagen, das heißt insbesondere Käsefertiger, Vorpreßwanne, Portionierungseinrichtung und dergleichen, benötigte Raumhöhe von bis zu 8 Metern bei größten Anlagebereichen praktisch nicht genutzt werden kann.

Die Ausbildung dieser bekannten Käse-Nachpressen ist nach drei Seiten hin offen, mit der Folge, daß die Käserohblöcke oder Käserohlinge im Verlauf des Preßvorgangs, der etwa 30 Minuten bis etwa 180 Minuten dauert, erheblich an Wärme (35° bis 54°C) verlieren. Infolgedessen wird die Umwandlung von Milchzucker in Milchsäure verzögert und der Molkeablauf verlangsamt sich insgesamt. Der erforderliche pH-Wert für den Eintritt des Käses aus einem Salzbad stellt sich daher erst nach längerer Zeit ein.

Die vorgegebene Wärmeabstrahlung an den Produktionsraum und an das entsprechende Gebäude kann nur reduziert werden, wenn die Temperaturdifferenz zwischen abstrahlendem Produkt und aufnehmender Umgebung möglichst klein wird. Diese zunehmende Annäherung erfordert jedoch höhere Raumtemperatur, somit ein ungünstiges Arbeitsklima für die Bedienungspersonen.

Darüber hinaus führen diese offen ausgebildeten Nachpreßanordnungen aufgrund ihrer Konstruktion dazu, daß die aus den Fertigpreßformen abfließende Molke an den Formenaußenseiten antrocknet und darüber hinaus aber auch der entsprechende Preßtisch mit Molke- und Eiweißresten verklebt wird. Ein solches Antrocknen von Flüssigkeiten und dergleichen erschwert eine Innenreinigung der Preßeinrichtung und setzt im Zuge einer Reinigung die unmittelbar daneben angeordneten, mit Käserohlingen geladenen Preßeinrichtungen einer Benetzung und Kontamination durch Reinigungsmittel aus. Die Außen- und Innenreinigung der bekannten Preßeinrichtungen erfolgt üblicherweise manuell durch Versprühen von Schaumreinigungsmitteln, welche nach Ablauf einer gewissen Einwirkzeit mittels Wasser abgespritzt werden. Infolgedessen ist die Belastung für die Bedienungspersonen und deren Gesundheit erheblich, darüber hinaus gelangen große Mengen an Reinigungsmitteln ins Abwasser.

Bei den bekannten, offenen Preßeinrichtungen führt die wie oben erläuterte, manuelle Reinigung zu Vermischungen mit Molke, welche ungefiltert in das Betriebsabwasser gelangen. Ferner ergibt sich aufgrund der Fußbodenbenetzung eine Verschleppung der Reinigungsmittel durch die Bedienungspersonen im gesamten Produktionsbereich.

Infolgedessen ist die Umweltbelastung über das Abwasser allein von der jeweiligen Sorgfältigkeit der Bedienungspersonen abhängig ist, das heißt, es ist letztendlich nicht nachvollziehbar, ob und wieviel Reinigungsmittel und in welcher Konzentration eingesetzt werden. Gefahren für das Endprodukt Käse einerseits und die Umwelt andererseits sind offensichtlich.

Darüber hinaus gibt es bei den wie oben erläuterten, bekannten Systemen lediglich manuelle Aufzeichnungen über die CIP (cleaning-in- place)-Folge.

Der Neuerung liegt die Aufgabe zugrunde, eine verbesserte Vorrichtung zum Formen von Käserohlingen durch Pressen der eingangs definierten Art zu schaffen, wobei sich diese neue Vorrichtung insbesondere durch optimale Ausnutzung der zur Verfügung stehenden Gebäude- und Raumhöhen bei geringstmöglichem Flächenbedarf, durch Vermeidung von Wärmeabstrahlung von der Vorrichtung in die Umgebung (Arbeitsbereich), durch Vermeidung von Verkrusten oder Verkleben von Käse- oder Molketeilen an den Käsepreßformen bzw. an den Preßplätzen der Vorrichtung, sowie durch möglichst geringe Umweltbelastung auszeichnen soll.

Zur Lösung dieser der Neuerung zugrundeliegenden Aufgabe ist bei einer Vorrichtung zum Formen von Käserohlingen durch Pressen der eingangs definierten Art vorgesehen, daß die Vorrichtung als eine sich im wesentlichen in vertikaler Richtung erstreckende, geschlossene Mehretagenanordnung mit einer vorgegebenen Anzahl von separaten Etagen ausgebildet ist und daß in jeder Etage ein Preßtisch mit im wesentlichen horizontaler Ausrichtung angeordnet ist, wobei im Bereich jeder der in Vertikalrichtung aufeinanderfolgend angeordneten Etagen ein im wesentlichen horizontal verlaufender Tunnel gebildet ist, in welchem die Preßplätze mit zugeordneten Preßeinrichtungen in wenigstens einer Reihe aufeinanderfolgend auf dem Preßtisch angeordnet sind.

Bei der neuerungsgemäßen Vorrichtung ist die Mehretagenbauweise mit einer vorgegebenen Anzahl von separaten, übereinander angeordneten Etagen außerordentlich vorteilhaft, weil je nach Größen-Ausführung der Vorrichtung bis zu 2/3, 3/4 oder sogar 4/5 der Grundfläche eingespart werden können.

Vorzugsweise weist jeder Preßtisch der neuerungsgemäßen Vorrichtung mehrere, parallel zueinander verlaufende Reihen von Preßplätzen mit zugeordneten Preßeinrichtungen auf.

Mit besonderem Vorteil ist jeder Preßtisch mit Einrichtungen zur Führung der in die Vorrichtung einzubringenden, auf den zugeordneten Preßplätzen anzuordnenden Käsepreßformen auf einer Führungsbahn entlang eines Tunnels versehen.

Hierbei sind die Einrichtungen zur Führung der Käsepreßformen vorzugsweise in den jeweiligen Preßtisch integriert.

Die erwähnten Einrichtungen zum Führen der Käsepreßformen weisen vorzugsweise pro Preßplatz eine i.w. horizontale Schubstangenführung auf, vorzugsweise weist hierbei jede Schubstangenführung eine Schubstange mit beweglichen Klinken auf.

Für diese Schubstangenführungen eines Preßtisches kann vorzugsweise jeweils ein Schubstangenantrieb mittels einer Zahnstange vorgesehen sein.

Insbesondere ist hierbei die Schubstangenführung als eine offene Schubstangenkonstruktion ausgebildet.

Ferner kann jeder Schubstangenantrieb mit einem Getriebemotor mit regelbarer Geschwindigkeit verbunden sein. Ein derartiger Schubstangenantrieb mit Getriebemotor für jede Etage der Vorrichtung kann vorzugsweise an der Außenseite eines Gehäuses der Vorrichtung, d. h. außerhalb des jeweiligen Produktions- und Reinigungsraumes in den Tunneln, angebracht sein.

Es ist ferner vorteilhaft, wenn oberhalb eines jeden Preßtisches als Preßeinrichtung eine Pneumatikzylinderanordung zur Druckbeaufschlagung der in die Vorrichtung einzubringenden, auf den zugeordneten Preßplätzen anzuordnenden Käsepreßformen montiert ist.

Hierbei ist insbesondere für jeden Preßplatz ein Pneumatikzylinder mit einem in Richtung zur Oberseite der Käsepreßform, das heißt dem flexiblen Preßdeckel dieser Käsepreßform, weisendem Preßteller vorgesehen.

Darüber hinaus kann bei der neuerungsgemäßen Vorrichtung jede Etage eine CIP (cleaning-in-place)-Verrohrung mit Tankreinigungssprühköpfen oberhalb eines jeden Preßtisches aufweisen.

Weiterhin kann jeder Preßtisch einen Molkeablaufkanal und/oder einen CIP (cleaning-in-place)-Rücklaufkanal aufweisen.

Ferner können die Einrichtungen zur Führung der Käsepreßformen auf einer entsprechenden Führungsbahn entlang eines Tunnels gleichzeitig als Flüssigkeitsauffangschalen ausgebildet sein.

Weiterhin ist es möglich, daß die Einrichtungen zur Führung der Käsepreßformen auf einer Führungsbahn entlang eines Tunnels gleichzeitig einen jeweiligen Boden der entsprechenden Etage und ein jeweiliges Dach einer jeweils darunter angeordneten Etage bilden.

Vorzugsweise kann jede Einrichtung zur Führung der Käsepreßformen gleichzeitig als ein Sumpf für CIP (cleaning-in-place) bzw. Molkevorrat ausgebildet sein.

Mit besonderem Vorteil kann darüber hinaus die für jeden Preßplatz einer Etage vorgesehene Schubstangenführung auf einem Stützbügel angeordnet sein, der am Boden der entsprechenden Etage diagonal angeschweißt ist.

Weiterhin kann am Dach einer jeden Etage eine Pneumatikzylinderaufnahme angebracht sein, welche gleichzeitig eine Tragkonstruktion für einen Preßtisch in der jeweils darüber angeordneten Etage bildet.

Die Pneumatikzylinder der Pneumatikzylinderanordnungen können sämtlich aus Edelstahl gebildet sein. Weiterhin können die Pneumatikzylinderanordnungen mit Edelstahl-Verrohrungen zur Druckluftversorgung ausgerüstet sein. Die CIP (cleaning-in-place)-Verrohrungen können ebenfalls aus Edelstahl gebildet sein.

Gemäß weiterer Ausgestaltung der neuerungsgemäßen Vorrichtung ist vorgesehen, daß diese im Bereich von Zugängen zu den einzelnen Tunneln ein Aufzugsystem für die Käsepreßformen aufweist, wobei dieses Aufzugsystem einen integralen Bestandteil dieser Vorrichtung bildet.

Vorzugsweise ist hierbei wenigstens eine mit dem Gehäuse der Vorrichtung verbundene, vertikale Aufzugführungsstange vorgesehen, längs welcher das Aufzugsystem von Etage zu Etage verfahrbar ist.

Die Neuerung wird im nachfolgenden anhand eines Ausführungsbeispiels näher erläutert, wobei auf die beigefügten Zeichnungen Bezug genommen wird. Dabei zeigen:
Fig. 1 schematisch eine Frontansicht einer Vorrichtung zum Formen von Käserohlingen durch Pressen mit geöffneter Frontseite, wodurch ein Einblick in die diese Vorrichtung bildende Mehretagenanordnung mit einer vorgegebenen Anzahl von separaten Etagen ermöglicht ist; und
Fig. 2 eine schematische Seitenansicht der in Fig. 1 dargestellten Vorrichtung.

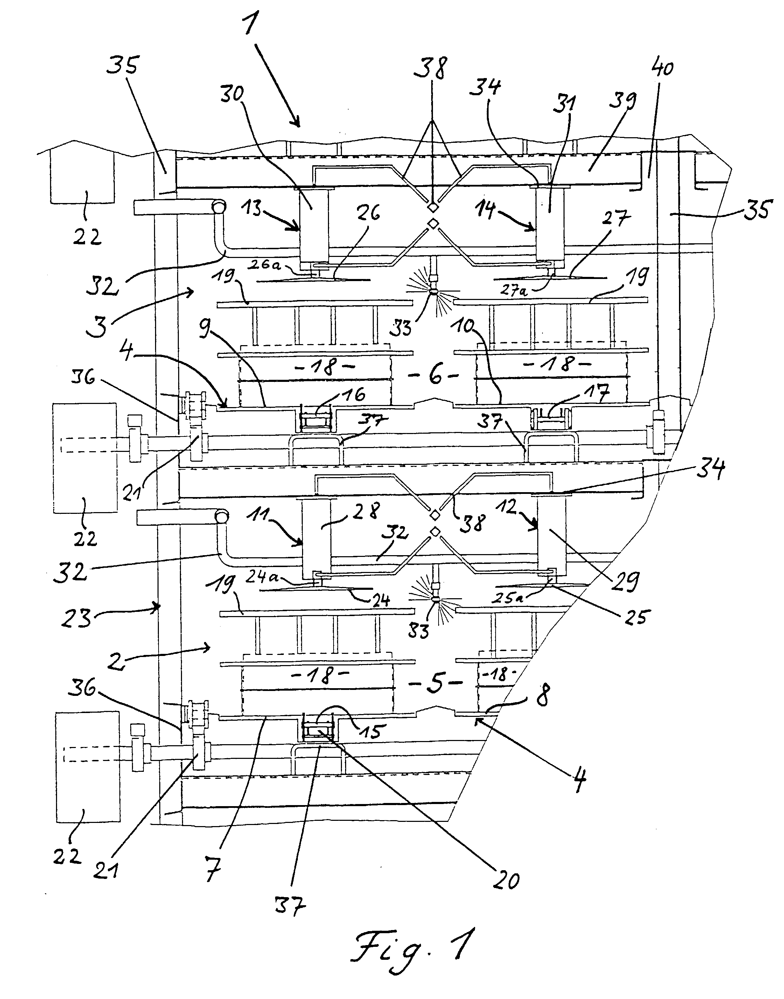

Wie aus Fig. 1 zu ersehen ist, ist eine Vorrichtung 1 zum Formen von Käserohlingen durch Pressen insgesamt als eine sich im wesentlichen in der Vertikalrichtung erstreckende Mehretagenanordnung ausgebildet, welche eine vorgegebene Anzahl von separaten Etagen 2, 3 aufweist, wobei in jeder Etage 2, 3 ein Preßtisch 4 mit im wesentlichen horizontaler Ausrichtung angeordnet ist. Im Bereich jeder der in Vertikalrichtung aufeinanderfolgend angeordneten Etagen 2, 3 ist ein im wesentlichen horizontal verlaufender Tunnel 5, 6 gebildet, in welchem Preßplätze 7, 8, 9, 10 zum Aufnehmen von die (nicht gezeigten) Käserohlinge enthaltenden Käsepreßformen 18 angeordnet sind. Im vorliegenden Ausführungsbeispiel sind diese Preßplätze 7, 8, 9, 10 in zwei parallelen Reihen jeweils aufeinanderfolgend auf dem jeweiligen Preßtisch 4 angeordnet. Jedem Preßplatz 7, 8, 9, 10 ist eine Preßeinrichtung 11, 12, 13, 14 zugeordnet, wobei jeweils oberhalb eines jeden Preßtisches 4 pro Etage eine Pneumatikzylinderanordnung als Preßeinrichtung zur Druckbeaufschlagung der in die Vorrichtung 1 einzubringenden, auf den zugeordneten Preßplätzen 7, 8, 9, 10 anzuordnenden Käsepreßformen 18 montiert ist. Jede Käsepreßform 18 weist einen flexiblen Preßdeckel 19 auf. Insbesondere ist für jeden Preßplatz 7, 8, 9, 10 ein Pneumatikzylinder 28, 29, 30, 31 mit einem in Richtung zur Oberseite der Käsepreßform 18, das heißt in Richtung zu dem entsprechenden flexiblen Preßdeckel 19 weisenden Preßteller 24, 25, 26, 27 vorgesehen. Hierbei ist jeder Preßteller 24 bzw. 25 bzw. 26 bzw. 27 mit dem Pneumatikzylinder 28 bzw. 29 bzw. 30 bzw. 31 durch eine Kolbenstange 24a bzw. 25a bzw. 26a bzw. 27a verbunden.

Darüber hinaus ist jeder Preßtisch 4 pro Etage 2, 3 mit Einrichtungen 15, 16, 17 zum Führen der in die Vorrichtung 1 einzubringenden, auf den entsprechenden Preßplätzen 7, 8, 9, 10 anzuordnenden Käsepreßformen 18 auf einer Führungsbahn entlang jeweils eines Tunnels 5, 6 versehen, wobei vorzugsweise diese Einrichtungen 15, 16, 17 zur Führung der Käsepreßformen 18 in den entsprechenden Preßtisch 4 integriert sind.

Jede Einrichtung 15, 16, 17 zum i.w. horizontalen Führen der Käsepreßformen 18 pro Preßplatz 7, 8, 9, 10 weist eine horizontale Schubstangenführung auf, bei welcher jeweils eine Schubstange 20 mit beweglichen Klinken vorgesehen ist. Diese Schubstangenführungen sind jeweils als offene Schubstangenkonstruktion ausgebildet und weisen pro Preßtisch 4 jeweils einen Schubstangenantrieb 21 mittels Zahnstangen auf.

Die Vorrichtung 1 weist ein Gehäuse 23 mit seitlich angeordneten Stützen 35 und mit diesen Stützen 35 verbundenen Quertraversen 39 sowie Längstraversen 40 auf. Jeder Etage 2, 3 ist ein Schubstangenantrieb 21 zugeordnet, welcher an einer Innenseite des Gehäuses 23 der Vorrichtung 1 angebracht ist. Jeder der Schubstangenantriebe 21 mit zugeordnetem Getriebemotor 22 ist im Bereich eines seitlichen offenen Zwischenprofils 36 des Gehäuses 23 angeordnet.

Darüber hinaus weist jede Etage 2, 3 eine CIP (cleaning-in-place)-Verrohrung 32 mit Tankreinigungssprühköpfen 33 oberhalb eines jeden Preßtisches 4 auf. Ferner kann jeder Preßtisch 4 einen Molkeablaufkanal sowie einen CIP (cleaning-in-place)-Rücklaufkanal aufweisen, wie dies in der Zeichnung im einzelnen nicht dargestellt ist. Außerdem können die Einrichtungen 15, 16, 17 zur Führung der Käsepreßformen 18 gleichzeitig jeweils als Flüssigkeitsauffangschale ausgebildet sein.

Insbesondere bilden diese Einrichtungen 15, 16, 17 zur Führung der Käsepreßformen 18 gleichzeitig einen jeweiligen Boden einer Etage 2, 3 und ein jeweiliges Dach einer jeweils darunter angeordneten Etage 2, 3. Schließlich können die Einrichtungen 15, 16, 17 zur Führung der Käsepreßformen 18 gleichzeitig als ein Sumpf für CIP (cleaning-in-place) bzw. Molkevorrat ausgebildet sein.

Die Schubstangenführung einer jeweiligen Einrichtung 15, 16, 17 zur Führung der Käsepreßformen 18 ist an jedem Preßplatz 7, 8, 9, 10 auf einem Stützbügel 37 angeordnet, der am Boden einer Etage 2, 3 diagonal angeschweißt ist.

Am Dach einer jeden Etage 2, 3 der Vorrichtung 1 ist eine Pneumatikzylinderaufnahme 34 angebracht, welche gleichzeitig eine Tragkonstruktion für einen Preßtisch 4 in der jeweils darüber angeordneten Etage 2, 3 bildet. Vorzugsweise sind die Pneumatikzylinder 28, 29, 30, 31 der Pneumatikzylinderanordnungen aus Edelstahl gebildet, ebenfalls sind diese Pneumatikzylinderanordnungen mit Edelstahlverrohrungen 38 zur Druckluftversorgung ausgerüstet. Mit Vorteil sind aber auch die CIP (cleaning-in-place)-Verrohrungen 32 aus Edelstahl gebildet.

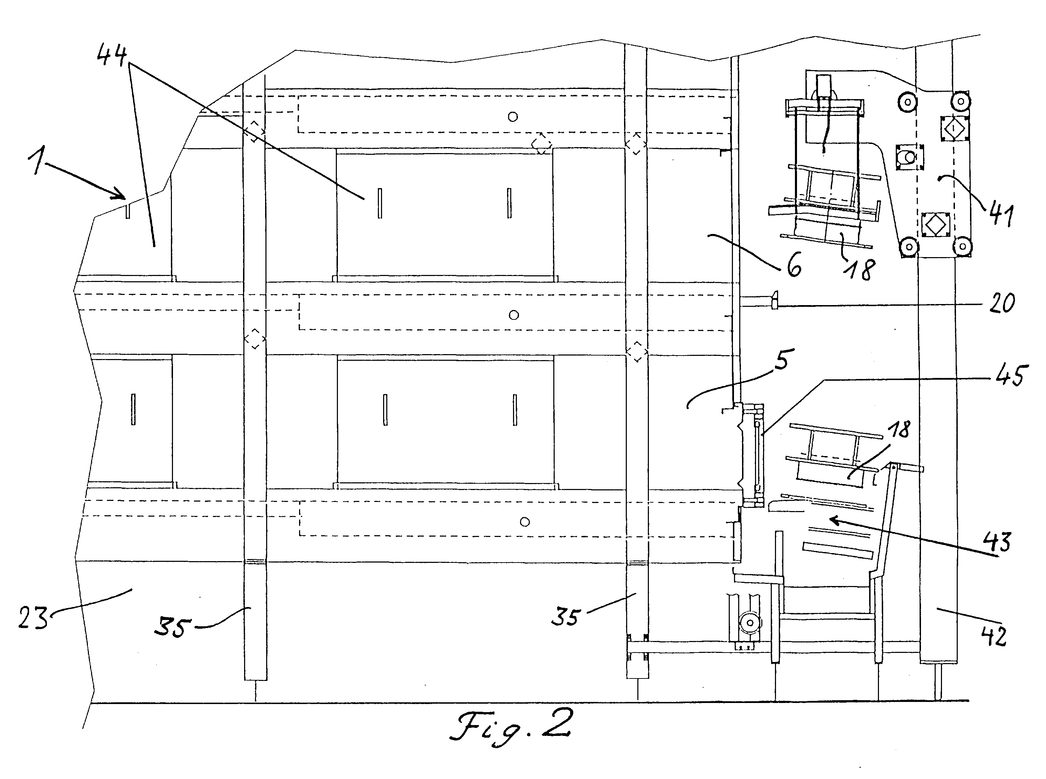

Wie aus Fig. 2 zu ersehen ist, weist die Vorrichtung 1 im Bereich von Zugängen zu den einzelnen Tunneln 5, 6 ein Aufzugsystem 41 für die Käsepreßformen 18 auf, wobei dieses Aufzugsystem 41 einen integralen Bestandteil der Vorrichtung 1 bildet.

Hierbei ist vorzugsweise wenigstens eine mit dem Gehäuse 23 verbundene, vertikale Aufzugführungsstange 42 vorgesehen, längs welcher das Aufzugsystem 41 von Etage zu Etage verfahrbar ist.

Bei Betrieb wird das Aufzugsystem 41 jeweils im Bereich eines Tunnelzugangs angehalten, um die Käsepreßformen 18 auf die entsprechende Führungsbahn entlang eines Tunnels 5, 6 zu laden bzw. von dieser Führungsbahn zu entladen.

Wie ferner aus Fig. 2 zu ersehen ist, ist jeder Tunnelzugang mittels einer fahrbaren Abdunst- und Reinigungsabschlußtür 45 mit Metalllabyrinthsystem verschließbar.

Darüber hinaus sind in wenigstens einem seitlichen Bereich des Gehäuses 23 der Vorrichtung 1 für jeden Tunnel 5, 6 verschließbare Inspektionsöffnungen 44 vorgesehen, wobei insbesondere diese Inspektionsöffnungen 44 mechanisch abgedichtet, dunstfrei und spritzgeschützt ausgebildet sein können.

Schließlich ist im Bereich des Aufzugsystems 41 wenigstens eine Transportbahn 43 für die Käsepreßformen 18 angeordnet.

Die neuerungsgemäße Vorrichtung zum Formen von Käserohlingen durch Pressen weist insbesondere die folgenden Vorteile auf:
- Die in sich geschlossene Mehretagenbauweise erlaubt eine Anordnung der Preßeinrichtungen und der Käsepreßformen übereinander, was zu einem geringstmöglichen Flächenbedarf der Vorrichtung bei optimaler Ausnutzung der zur Verfügung stehenden Gebäude- und Raumhöhen führt.
- Das bei der neuerungsgemäßen Vorrichtung vorgesehene Tunnelsystem ist vollständig verschließbar, wobei die einzelnen Tunnel des Systems sämtliche erforderlichen Komponenten, wie Preßtische, Pneumatikzylinderanordnungen, Einrichtungen zur Führung der Käsepreßformen, Druckluftversorgung, Reinigungsausrüstung und dergleichen mehr enthalten.
- Jede Preßeinrichtung der neuerungsgemäßen Vorrichtung weist ein integriertes CIP (cleaning-in-place)-Reinigungssystem mit Flüssigkeitspuffer und Ablaufweg auf.
- Die Pneumatikzylinder, die Verrohrungen zur Druckluftversorgung sowie die CIP (cleaning-in-place)-Verrohrungen sind aus reinigungs- und temperaturfestem Edelstahl ausgebildet. Dies bedeutet eine saubere, feste Anschlußverrohrung ohne Druckluft-Leckverluste.
- Es treten keine Produkt-Wärmeabstrahlungsverluste auf, da der gesamte Innenraum der neuerungsgemäßen Vorrichtung von der Gebäuderaumluft weitestgehend getrennt ist, so daß auch keine Raumluftzirkulation eine Wärmeübertragung ermöglicht. Die Folge ist ein schnelleres Reifungsverhalten bezüglich der pH-Wert-Bildung.
- Die geschlossene Bauweise der neuerungsgemäßen Vorrichtung gewährleistet, daß es zu keiner Wärmeabstrahlung in die Produktionsräume kommt, das heißt, es erfolgt keine Wärmeenergieabgabe an die Raumluft, wodurch die Raumtemperatur des Arbeitsbereiches geschützt wird.
- Ein Antrocknen, Verkleben und Verkrusten von Käse- oder Molketeilen im inneren Bereich der neuerungsgemäßen Vorrichtung, insbesondere an den Preßeinrichtungen und den Käsepreßformen wird durch das Feuchtklima in den einzelnen Tunneln der neuerungsgemäßen Vorrichtung sowie in den Käsepreßformen vermindert. Dies führt zu einer erheblichen Erleichterung der CIP (cleaning-in-place)-Reinigung hinsichtlich Energie- und Konzentrationsaufwand.
- Die CIP (cleaning-in-place)-Reinigung pro Etage der neuerungsgemäßen Vorrichtung kann unabhängig von den unter Produktion stehenden Preßeinrichtungen erfolgen, ohne daß Verspritzungen, Vermischungen oder Kontamination von Käse möglich sind. Die CIP-Schritte erfolgen hinsichtlich Zeit, Menge, Temperatur und Konzentration gesteuert und überwacht und sind jederzeit registrierbar sowie nachvollziehbar.
- Vermischungen zwischen Molkeflüssigkeiten und Reinigungsmitteln sind infolge der neuerungsgemäßen Ausbildung der Vorrichtung (geschlossene Mehretagenanordnung) nicht möglich, was insbesondere zu erheblichen Einsparungen bei der Abwasserbelastung führt.
- Die geschlossene Ausführung der neuerungsgemäßen Vorrichtung erlaubt eine effektive Desinfektion der Anlagen im direkten Anschluß an die CIP-Reinigung oder als Zwischenreinigung, ohne daß für die Bedienungspersonen besondere Schutzmaßnahmen, insbesondere gegenüber Augenreizung, getroffen werden müssen.
- Der gesamte Produktionsbereich bleibt während der CIP-Reinigung abdampffrei, so daß das Bedienungspersonal, die Maschinenteile, die Gebäudeteile und andere Ausrüstungsgegenstände, die nicht reinigungsmittelbeständig sind, optimal geschützt sind.
- Ein Austrocknen der Käsepreßformen ist verhindert, was zu einer erheblichen Qualitätssteigerung der resultierenden Käsestücke hinsichtlich Quellung, Paßgenauigkeit und dergleichen mehr führt.

## Patentansprüche

1. Vorrichtung (1) zum Formen von Käserohlingen durch Pressen, wobei die Vorrichtung wenigstens einen Preßtisch (4) mit einer vorgegebenen Anzahl von Preßplätzen zum Aufnehmen von die Käserohlinge enthaltenden Käsepreßformen (18) mit flexiblen Preßdeckeln (19) aufweist und wobei jedem Preßplatz eine steuerbare Preßeinrichtung zugeordnet ist, durch welche die entsprechende Käsepreßform für eine vorgegebene bzw. wählbare Zeitspanne mit Druck beaufschlagbar ist, **dadurch gekennzeichnet**, daß die Vorrichtung (1) als eine sich im wesentlichen in Vertikalrichtung erstreckende, geschlossene Mehretagenanordnung mit einer vorgegebenen Anzahl von separaten Etagen (2, 3) ausgebildet ist und daß in jeder Etage ein Preßtisch (4) mit im wesentlichen horizontaler Ausrichtung angeordnet ist, wobei im Bereich jeder der in Vertikalrichtung aufeinanderfolgend angeordneten Etagen (2, 3) ein im wesentlichen horizontal verlaufender Tunnel (5, 6) gebildet ist, in welchem die Preßplätze (7, 8, 9, 10) mit zugeordneten Preßeinrichtungen (11, 12; 13, 14) in wenigstens einer Reihe aufeinanderfolgend auf dem Preßtisch (4, 5) angeordnet sind.

2. Vorrichtung nach Anspruch 1, **dadurch gekennzeichnet**, daß jeder Preßtisch (4) mehrere, parallel zueinander verlaufende Reihen von Preßplätzen (7, 8; 9, 10) mit zugeordneten Preßeinrichtungen (11, 12; 13, 14) aufweist.

3. Vorrichtung nach Anspruch 1 oder 2, **dadurch gekennzeichnet**, daß jeder Preßtisch (4) mit Einrichtungen (15, 16, 17) zur Führung der in die Vorrichtung (1) einzubringenden, auf den zugeordneten Preßplätzen (7, 8; 9, 10) anzuordnenden Käsepreßformen (18) auf einer Führungsbahn entlang eines Tunnels (5, 6) versehen ist.

4. Vorrichtung nach Anspruch 3, **dadurch gekennzeichnet**, daß die Einrichtungen (15, 16, 17) zur Führung der Käsepreßformen (18) in den jeweiligen Preßtisch (4) integriert sind.

5. Vorrichtung nach Anspruch 3 oder 4, **dadurch gekennzeichnet**, daß die Einrichtungen (15, 16, 17) zum Führen der Käsepreßformen (18) pro Preßplatz (7, 8; 9, 10) eine i.w. horizontale Schubstangenführung aufweisen.

6. Vorrichtung nach Anspruch 5, **dadurch gekennzeichnet**, daß die Schubstangenführung eine Schubstange (20) mit beweglichen Klinken aufweist.

7. Vorrichtung nach einem der Ansprüche 3 bis 6, **dadurch gekennzeichnet**, daß für die Schubstangenführungen eines Preßtisches (4) jeweils ein Schubstangenantrieb (21) mittels einer Zahnstange vorgesehen ist.

8. Vorrichtung nach einem der Ansprüche 5 bis 7, **dadurch gekennzeichnet**, daß die Schubstangenführung als eine offene Schubstangenkonstruktion ausgebildet ist.

9. Vorrichtung nach einem der Ansprüche 5 bis 8, **dadurch gekennzeichnet**, daß jeder Schubstangenantrieb (21) mit einem Getriebmotor (22) mit regelbarer Geschwindigkeit verbunden ist.

10. Vorrichtung nach einem der Ansprüche 5 bis 9, **dadurch gekennzeichnet,** daß jeder Etage (2, 3) ein Schubstangenantrieb (21) mit Getriebemotor (22) zugeordnet ist, welcher an einer Außenseite eines Gehäuses (23) der Vorrichtung (1) angebracht ist.

11. Vorrichtung nach einem der vorhergehenden Ansprüche, **dadurch gekennzeichnet**, daß oberhalb eines jeden Preßtisches (4) als Preßeinrichtung (11, 12; 13, 14) eine Pneumatikzylinderanordnung zur Druckbeaufschlagung der in die Vorrichtung einzubringenden, auf den zugeordneten Preßplätzen (7, 8; 9, 10) anzuordnenden Käsepreßformen (18) montiert ist.

12. Vorrichtung nach Anspruch 11, **dadurch gekennzeichnet**, daß für jeden Preßplatz (7, 8; 9, 10) ein Pneumatikzylinder (28, 29; 30, 31) mit einem in Richtung zur Oberseite der Käsepreßform (18) weisenden Preßteller (24, 25; 26; 27) vorgesehen ist.

13. Vorrichtung nach einem der vorhergehenden Ansprüche, **dadurch gekennzeichnet**, daß jede Etage (2, 3) eine CIP (cleaning-in-place)-Verrohrung (32) mit Tankreinigungssprühköpfen (33) oberhalb eines jeden Preßtisches (4) aufweist.

14. Vorrichtung nach einem der vorhergehenden Ansprüche, **dadurch gekennzeichnet**, daß jeder Preßtisch (4) einen Molkeablaufkanal aufweist.

15. Vorrichtung nach einem der vorhergehenden Ansprüche, **dadurch gekennzeichnet**, daß jeder Preßtisch (4) einen CIP (cleaning-in-place)-Rücklaufkanal aufweist.

16. Vorrichtung nach einem der Ansprüche 3 bis 15, **dadurch gekennzeichnet**, daß die Einrichtungen (15, 16, 17) zur Führung der Käsepreßformen (18) gleichzeitig als Flüssigkeitsauffangschalen ausgebildet sind.

17. Vorrichtung nach einem der Ansprüche 3 bis 16, **dadurch gekennzeichnet**, daß die Einrichtungen (15, 16, 17) zur Führung der Käsepreßformen (18) gleichzeitig einen jeweiligen Boden einer Etage (2, 3) und ein jeweiliges Dach einer jeweils darunter angeordneten Etage (2, 3) bilden.

18. Vorrichtung nach einem der Ansprüche 3 bis 17, **dadurch gekennzeichnet**, daß jede Einrichtung (15, 16, 17) zur Führung der Käsepreßformen (18) gleichzeitig als ein Sumpf für CIP (cleaning-in-place) bzw. Molkevorrat ausgebildet ist.

19. Vorrichtung nach einem der Ansprüche 5 bis 18, **dadurch gekennzeichnet**, daß die Schubstangenführung an jedem Preßplatz (7, 8; 9, 10) auf einem Stützbügel (37) angeordnet ist, der am Boden einer Etage (2, 3) diagonal angeschweißt ist.

20. Vorrichtung nach einem der Ansprüche 11 bis 19, **dadurch gekennzeichnet**, daß am Dach einer jeden Etage (2, 3) eine Pneumatikzylinderaufnahme (34) angebracht ist, welche gleichzeitig eine Tragkonstruktion für einen Preßtisch (4) in der jeweils darüber angeordneten Etage (2, 3) bildet.

21. Vorrichtung nach einem der Ansprüche 11 bis 20, **dadurch gekennzeichnet**, daß die Pneumatikzylinder (28, 29; 30, 31) der Pneumatikzylinderanordnungen aus Edelstahl gebildet sind.

22. Vorrichtung nach einem der Ansprüche 11 bis 21, **dadurch gekennzeichnet**, daß die Pneumatikzylinderanordnungen mit Edelstahl-Verrohrungen (38) zur Druckluftversorgung ausgerüstet sind.

23. Vorrichtung nach einem der Ansprüche 13 bis 22, **dadurch gekennzeichnet**, daß die CIP (cleaning-in-place)-Verrohrungen (32) aus Edelstahl gebildet sind.

24. Vorrichtung nach einem der vorhergehenden Ansprüche, **dadurch gekennzeichnet**, daß die Vorrichtung (1) im Bereich von Zugängen zu den einzelnen Tunneln (5, 6) ein Aufzugsystem (41) für die Käsepreßformen (18) aufweist, wobei dieses Aufzugsystem (41) einen integralen Bestandteil der Vorrichtung (1) bildet.

25. Vorrichtung nach Anspruch 24, **gekennzeichnet durch** wenigstens eine mit dem Gehäuse (23) der Vorrichtung (1) verbundene, vertikale Aufzugführungsstange (42), längs welcher das Aufzugsystem (41) von Etage zu Etage verfahrbar ist.

26. Vorrichtung nach einem der vorhergehenden Ansprüche, **dadurch gekennzeichnet**, daß jeder Tunnelzugang mittels einer fahrbaren Abdunst- und Reinigungsabschlußtür (45) mit Metalllabyrinthsystem verschließbar ist.

27. Vorrichtung nach einem der vorhergehenden Ansprüche, **dadurch gekennzeichnet**, daß wenigstens in einem seitlichen Bereich des Gehäuses (23) der Vorrichtung (1) für jeden Tunnel (5, 6) verschließbare Inspektionsöffnungen (44) vorgesehen sind.

28. Vorrichtung nach Anspruch 27, **dadurch gekennzeichnet**, daß die Inspektionsöffnungen (44) mechanisch abgedichtet, dunstfrei und spritzgeschützt ausgebildet sind.

29. Vorrichtung nach einem der Ansprüche 24 bis 28, **dadurch gekennzeichnet**, daß im Bereich des Aufzugsystems (41) wenigstens eine Transportbahn (43) für die Käsepreßformen (18) angeordnet ist.
